# FASCICULE DE BREVET EUROPEEN

(11) **EP 0 622 140 B1**
(45) Date de publication et mention de la délivrance du brevet: **03.03.1999**
(21) Numéro de dépôt: 94400914.1
(22) Date de dépôt: 27.04.1994
(51) Int. Cl.: B22D 41/24, F27D 3/15, C21C 5/46, C03B 5/26

(54) **Dispositif d'extraction par coulée à débit réglable d'un matériau fondu dans un four de fusion à parois froides**
Steuerungsanlage für den Schmelzausfluss in kalten Tiegelöfen
Casting device with controlled flow of materials smolten in a cold crucible furnace

(30) Priorité: 29.04.1993 FR 9305079
(43) Date de publication de la demande: 02.11.1994
(73) Titulaire: COMMISSARIAT A L'ENERGIE ATOMIQUE, 75015 Paris Cédex 15 (FR); COMPAGNIE GENERALE DES MATIERES NUCLEAIRES (COGEMA), 78141 Vélizy-Villacoublay (FR)
(72) Inventeur: Ladirat, Christian, F-30126 Saint Laurent des Arbres (FR); Pilliol, Henri, F-84000 Avignon (FR); Gnilka, Jean-Pierre, F-30200 Bagnols sur Ceze (FR)
(74) Mandataire: Dubois-Chabert, Guy

(56) Documents cités:
- FR-A- 2 408 418
- FR-A- 2 668 726
- US-A- 1 643 601

## Description

La présente invention se rapporte d'une façon générale aux fours d'élaboration ou de fusion de matériaux oxydes tels que le verre ou la céramique qui comportent des parois refroidies par circulation d'eau suivant le préambule de la revendication 1.

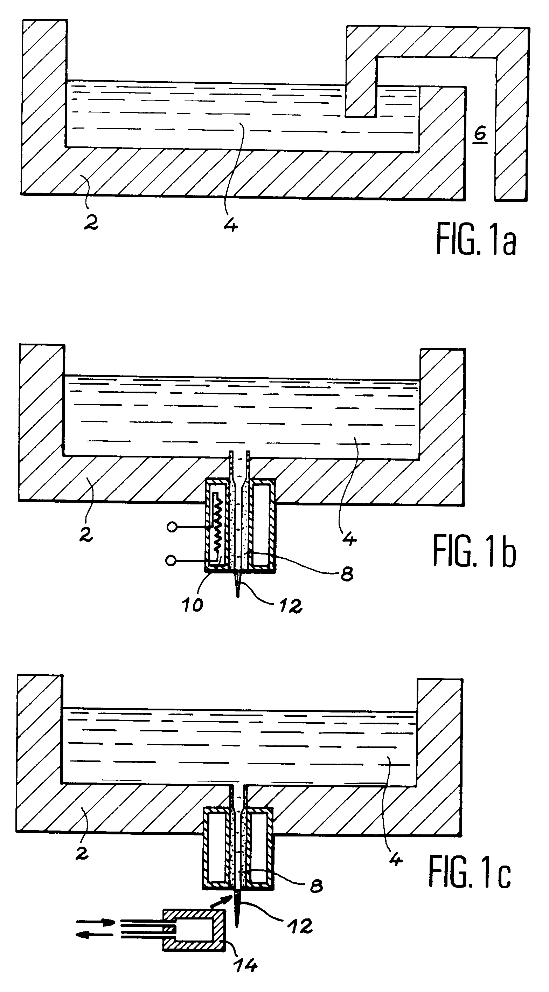

La présente invention se rapporte de façon encore plus précise au problème du soutirage du matériau fondu dans le four et elle a pour but, à cet effet, d'améliorer les solutions connues de l'art antérieur que l'on va rappeler maintenant en se référant aux figures 1a, 1b et 1c.

Sur ces figures on a désigné par la référence 2 les parois d'un four de fusion rempli d'un verre ou d'une céramique à l'état liquide 4.

Sur la figure 1a on a illustré le procédé simple et bien connu de prélèvement par débordement dans lequel les parois latérales du four sont de hauteur inégale et permettent par un canal 6 l'évacuation du matériau fondu par débordement d'une partie de la paroi du four.

Les figures 1b et 1c montrent des solutions également connues, de prélèvement par extraction par gravité à partir d'un orifice creusé dans la parois inférieure du four. Dans le cas de la figure 1b, le prélèvement direct dans le fond du four intervient par un conduit 8, réchauffé par un four électrique latéral 10, susceptible de maintenir le matériau en fusion pendant son extraction. Un bouchon thermique de verre 12 provoqué par refroidissment du tube de coulée permet ensuite d'obturer l'orifice lorsque la quantité nécessaire de matériau fondu a été extraite.

Dans le cas de la figure 1c, on retrouve les mêmes éléments que sur la figure 1b, mais un bouchon 14, du type métallique réfrigéré par une circulation d'eau dans une enveloppe qui l'entoure, est amené à l'orifice de prélèvement pour provoquer, par refroidissement, l'obturation de l'orifice.

Dans les exemples des figures 1b et 1c, les tubes de coulée sont constitués en matériau réfractaire ou en métaux nobles, tels que le molybdène et le platine, réchauffés par un four auxiliaire à résistance ou à induction 10. Le début de coulée est contrôlé en adaptant le diamètre intérieur de l'orifice, la longueur du tube de coulée et sa température aux caractéristiques hydrodynamiques du matériau fondu (viscosité).

Un exposé de ces techniques peut être trouvé dans les Actes de la Conférence de Vienne de l'IAEA, Septembre 1986, dans l'article "GLASS-MELTER MATERIALS: TECHNICAL OPTIONS FOR THE FRENCH VITRIFICATION PROCESSS AND OPERATIONS EXPERIENCE AUTHORS, par R. BONNIAUD (CEA IRDI, Marcoule), R. DEMAY (CEA, IRDI, Fontenay-aux-Roses) R. RICHTER (SGN, St.Quentin en Yvelynes) et L. ROZAND (COGEMA, St.Quentin en Yvelines).

Ces dispositifs présentent un certain nombre de défauts qui sont cependant acceptables dans l'industrie verrière :
- les pièces réfractaires sont des pièces d'usure consommables ;
- les bouchons d'arrêt de coulée interposés dans le jet de verre provoquent des éclaboussures de verre liquide ;
- le refroidissement des tubes de coulée pour figer un bouchon de verre se fait avec une très grande inertie et l'opération est impossible lorsque le verre coule à une température très supérieure à sa température de ramolissement et lorsque le four de fusion est rempli de verre en fusion.

Ces défauts sont inacceptables pour leur application aux fours à induction directe en structure froide. En effet, ce type de four dont les parois et le fond sont entièrement refroidis est exempt de pièces en réfractaire et, de ce fait, sa durée de vie est très grande.

Ce genre de four est généralement de petite taille avec une masse de verre en fusion réduite et le dispositif de coulée doit permettre une action rapide sur le soutirage du verre.

Pour une application en milieu nucléaire où ce type de four est particulièrement adapté, les arrêts de coulée de verre doivent être très nets et ne pas projeter de verre en fusion sur les installations.

On connaît également, par le brevet US-A-1 643 601 sur lequel le préambule de la revendication 1 est basé, un dispositif d'extraction par coulée du verre fondu contenu dans un four de fusion. Pour effectuer une coulée, le verre fondu est transféré dans une chambre annexe du four. Le fond de cette chambre est pourvu d'un manchon métallique réfrigéré dont le passage central constitue l'orifice de coulée. Un dispositif à lame coulissante réfrigérée est disposé sous le fond de la chambre. Il est muni d'un actionneur commandant son déplacement en translation le long de l'orifice, déterminant ainsi son état de fermeture ou d'ouverture.

La présente invention a précisément pour objet un dispositif d'extraction par coulée à débit réglable qui permet, en palliant les inconvénients précédents, son application dans des conditions particulièrement difficiles, tels que par exemple en milieu nucléaire ou en boîte à gants.

L'invention concerne donc un dispositif d'extraction par coulée d'un matériau fondu dans un four de fusion à parois froides, ce four comportant un fond, pourvu d'un orifice, et des parois métalliques refroidis au moins en partie par une circulation d'eau, une source de chaleur apte à mettre en fusion le matériau à fondre et, sous le fond du four, un dispositif à au moins une lame coulissante réfrigérée, muni d'un actionneur commandant son déplacement en translation le long de l'orifice, caractérisé en ce que :
- ledit orifice possède un diamètre D supérieur ou égal à l'épaisseur H de la paroi constituant le four ;
- il comprend un manchon métallique dont la base comporte un épaulement apte à s'adapter aux parois latérales de l'orifice, ce manchon ayant un passage central qui constitue le tube de coulée du matériau fondu, un jeu étant prévu entre les parois latérales de l'orifice et la base du manchon pour loger un matériau isolant (22) entre le manchon et le fond froid du four ;
- le déplacement en translation de la lame coulissante détermine l'état de fermeture ou d'ouverture plus ou moins grande de l'orifice de manière a régler le débit du matériau fondu.

Comme on le voit, les deux moyens essentiels de l'invention résident dans le manchon métallique adaptable à la paroi de l'orifice inférieur du four et la lame réfrigérée coulissante qui sert d'obturateur de l'orifice inférieur du manchon précédent. Le manchon a une forme évasée à l'intérieur de sa paroi périphérique de façon à permettre l'écoulement du produit fondu et il constitue en partie haute l'amorce du canal d'écoulement de ce même produit. Le dispositif à lame coulissante qui sert d'obturateur et permet par conséquent de régler le débit en ouvrant plus ou moins l'orifice inférieur est prévu avec une réfrigération d'eau de manière que, dans la position où l'on obture l'orifice, une continuité de refroidissement soit assurée au fond du creuset et permette la formation, dans la base même du manchon métallique, d'une croûte de solidification du produit.

Une autre caractéristique intéressante de l'invention est que la lame coulissante possède un bord d'attaque incliné, ce qui lui permet de sectionner sans difficulté le jet de matériau fondu qui s'écoule par l'orifice lors d'un changement de position de l'obturateur.

Une autre caractéristique également intéressante de l'invention consiste à réaliser la base intérieure du manchon métallique sous une forme évasée en direction de l'orifice.

Le plus souvent, le matériau isolant situé entre le manchon et le fond froid du four est réalisé par une lame d'air.

Enfin, bien entendu, l'homme de métier sera en mesure de choisir les matériaux constituant les différentes pièces précédentes en fonction des produits fondus. Les plus souvent néanmoins, il est avantageux de constituer la lame coulissante en acier réfractaire et le manchon en molybdène.

De toute façon l'invention sera mieux comprise en se référant à la lecture de la description qui suit d'un mode de mise en oeuvre du dispositif d'extraction, description qui sera faite à titre descriptif et non limitatif en se référant aux figures 1 à 5 ci-jointes, sur lesquelles :
- les figures 1a à 1c illustrent des dispositifs connus d'extraction par coulée d'un matériau fondu dans des fours de fusion ;
- la figure 2 représente le schéma général du dispositif d'extraction en position fermée ;
- la figure 3 représente le même dispositif en position d'ouverture totale et en attente de coulée ;
- la figure 4 représente le même dispositif d'extraction toujours en position d'ouverture totale, la coulée de matériau fondu étant établie ;
- la figure 5 représente le dispositif d'extraction en position de fermeture intermédiaire pour régler le débit de coulée du matériau fondu.
- la figure 6 représente le dispositif d'extraction muni d'un four de fusion ayant un fond partiellement refroidi ;
- la figure 7 représente un autre exemple d'un dispositif d'extraction muni d'un fond partiellement refroidi et d'un orifice de coulée sans manchon ;
- la figure 8 représente un exemple de dispositif d'extraction à deux lames mobiles.

Dans la description qui suit et par simplification, ce matériau fondu sera désigné comme étant du verre, mais il est bien entendu que tout autre matériau oxyde, fusible, ainsi que les céramiques, relèvent de l'application du dispositif d'extraction objet de l'invention.

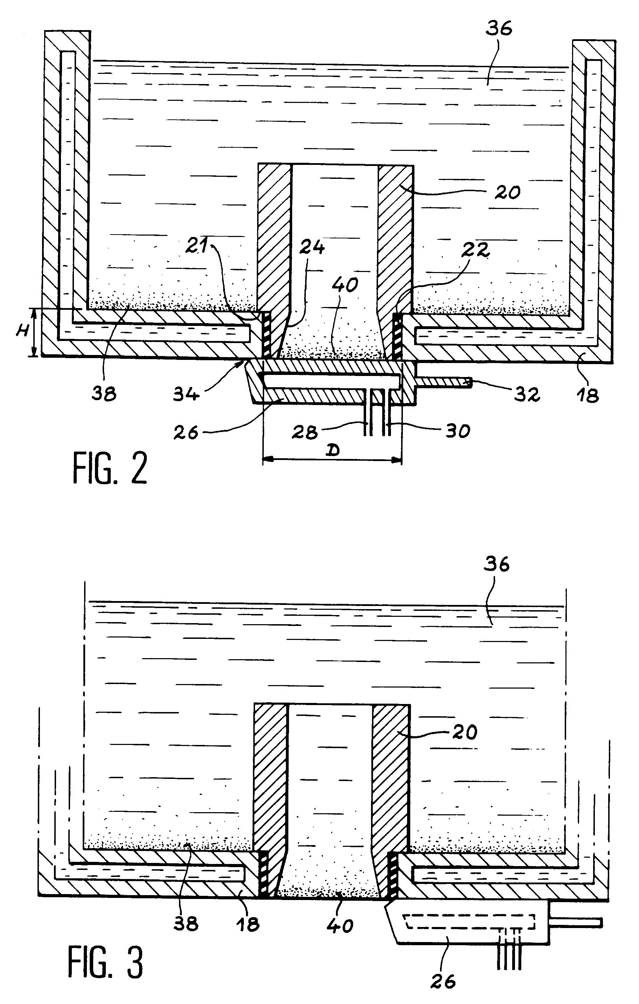

En ce référant à la figure 2, on va décrire d'abord d'une manière générale les éléments essentiels constitutifs de l'invention dans le cas où le dispositif est en position fermée.

Dans le fond du four, qui est constitué par une boîte métallique à doubles parois refroidie par eau 18, il y a un simple orifice dont le diamètre D est supérieur ou égal à l'épaisseur H du fond du four.

Cet orifice est chemisé avec un manchon métallique 20 dont le matériau résiste à la corrosion du verre et dans lequel est percé le tube de coulée. Le manchon 20 comporte à sa base un épaulement 21 qui permet de l'emboîter dans le fond 18.

Un espace 22 qui contient soit de l'air, soit un matériau isolant, est ménagé entre le tube 20 et le fond froid 18.

Les orifices pratiqués dans le fond du four et/ou le tube de coulée sont soit parfaitement cylindriques, soit de préférence légèrement coniques 24, évasés vers le bas pour faciliter l'écoulement.

Sous cet ensemble, un dispositif à une lame 26 refroidie par circulation d'eau (entrée 28, sortie 30) peut coulisser et se positionner au moyen d'un actionneur 32 de manière à obturer l'orifice. La lame 26 est, de préférence, réalisée en métal réfractaire et les différents matériaux du dispositif sont choisis pour faciliter le coulissement des pièces.

La lame a un profil tranchant 34 pour sectionner le jet de verre qui coule par l'orifice. Dans des modes particuliers de mise en oeuvre de l'invention, des dispositifs à deux ou plusieurs lames mobiles refroidies sont également envisageables pour sectionner le jet de verre. Le dispositif étant entièrement refroidi, les contraintes de dilatation auxquelles sont soumises les pièces de ce dispositif sont négligeables. Elles peuvent mécaniquement fonctionner dans l'environnement du bain de verre en fusion.

L'innovation apportée par le dispositif lui permet de s'appliquer à des produits fondus à haute température.

Dans une phase d'élaboration du verre représentée figure 2, la lame coulissante 26 est en position de fermeture complète de l'orifice de coulée. Au contact des pièces refroidies, il se forme une pellicule de verre 38 et 40 qui n'adhère ni au fond du four, ni à la lame 26 du dispositif.

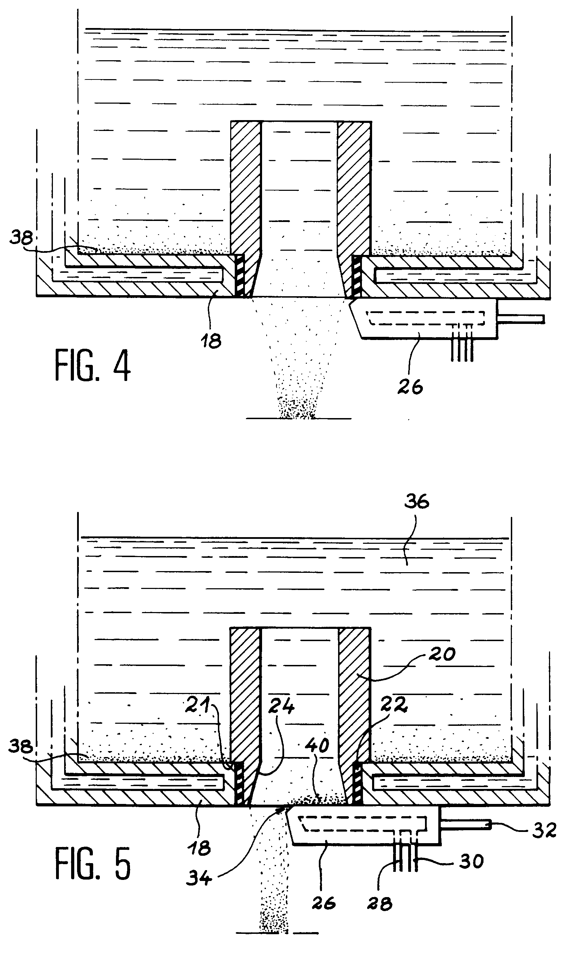

Pour réaliser une coulée de verre, la lame coulissante 26 est positionnée en ouverture totale de l'orifice de coulée, comme représenté sur la figure 3.

La fusion du verre 40 qui est figé au contact de la lame 26 est obtenue sans utilisation d'un mode de chauffage auxiliaire. Le manchon métallique 20 lorsque la lame 26 est retirée, assure la conduction thermique entre le bain de verre fondu et le verre figé 40. L'espace 22 qui contient soit de l'air, soit un isolant thermique, limite les pertes thermiques vers le fond refroidi 18. Le verre figé 40 fond et libère le verre en fusion au travers de l'orifice de coulée , ce que représente la figure 4.

L'utilisation du manchon 20 est nécessaire lorsque le rapport entre le diamètre D de l'orifice de la paroi 18 et son épaisseur H est petit (par exemple D/H=3). Lorsque le rapport est supérieur (par exemple D/H>5) le manchon 20 pourrait être supprimé car la conduction thermique des calories provenant du bain de verre en fusion dans le verre figé 40 est suffisante pour le faire fondre, mais sa présence assure toujours une bonne conduction thermique.

L'avantage apporté par le dispositif consiste à pouvoir fondre le bouchon de verre figé sans utiliser de mode de chauffage auxiliaire, et ceci avec ou sans utilisation de la pièce 20.

Sur la figure 5, qui montre le dispositif semi-ouvert, la lame coulissante 26 est alors positionnée de manière à obturer partiellement la buse de coulée et à régler le débit de coulée. Le positionnement de la lame coulissante 26 est asservi par l'intermédiaire de l'actionneur 32 au débit de coulée souhaité qui est mesuré en continu.

Un autre avantage apporté par le dispositif est de pouvoir ajuster la section de l'orifice de coulée du verre en fusion et de réguler ainsi le débit de coulée du verre.

L'arrêt de la coulée est provoqué par le positionnement de la lame refroidie 26 en position fermée. La lame a un profil de coupe 34 adapté au sectionnement du jet de verre. L'arrêt de la coulée est immédiat et le verre 40 se fige au contact de la lame refroidie 26 en se rétractant. Cet effet de rétractation provoque le décollement du verre de la lame refroidie 26 et rend possible les manoeuvres ultérieures.

Le principe de fonctionnement qui vient d'être décrit repose sur le principe physique de non adhésion du verre qui subit une trempe thermique très rapide sur une pièce métallique refroidie et isotherme.

A titre d'exemple, on a réalisé, selon l'invention, une installation de fusion de verre en creuset froid équipée du dispositif suivant :
- le fond froid 18, refroidi par circulation d'eau, a une épaisseur H de 15 mm. Il est muni d'un orifice de 50 mm de diamètre D. Le rapport entre le diamètre D et l'apaisseur H de l'orifice est de 3,33.
- La pièce de coulée 20 est réalisée en molybdène. Elle chemise le fond froid 18 avec un espace 22 de 1 mm. Le tube de coulée fait 30 mm de diamètre et présente une légère conicité 24 à sa base sur une hauteur de 15 mm.

La lame coulissante 26 est en Inconel® 601 et fait 15 mm d'épaisseur. Elle possède un angle de coupe 34 de 60°.

Avec un verre d'une viscosité de 8 Pa.s à 1200°C, on obtient des débits de coulée supérieurs à 1000 kg/h lorsque la lame est en position d'ouverture totale.

Une fois la coulée établie, il est possible de réguler le débit de verre à des valeurs comprises entre 10 et 1000 kg par positionnement de la lame sous l'orifice de coulée.

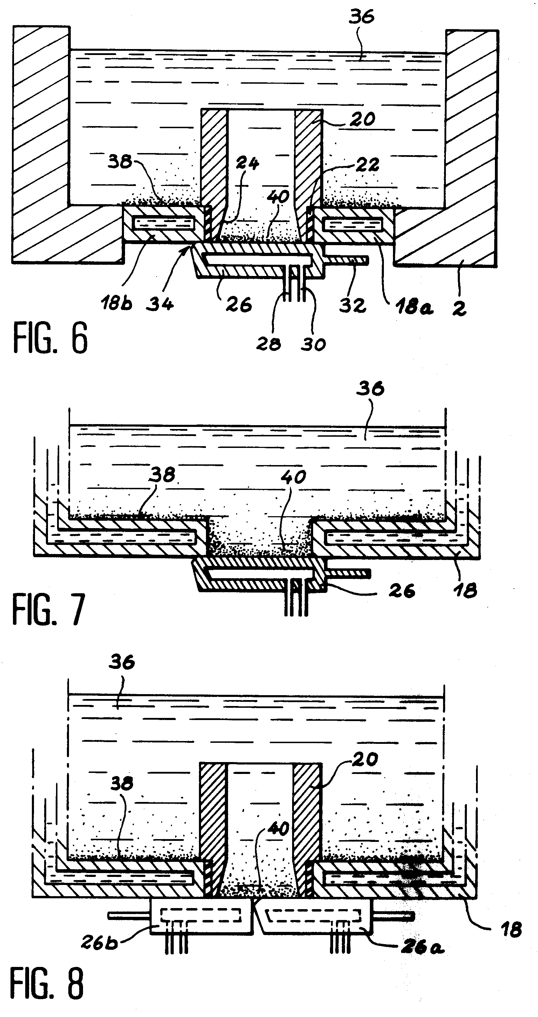

Sur les figures 6, 7 et 8, trois exemples de variantes du dispositif d'extraction selon l'invention sont représentées avec un fond partiellement refroidi 18a et 18b (fig. 6), avec un dispositif sans manchon (fig. 7) et avec deux lames mobiles 26a et 26b (fig. 8). Sur ces figures, les éléments correspondants portent les mêmes nombres de références que sur les figures 1 à 5.

## Revendications

1. Dispositif d'extraction par coulée d'un matériau fondu dans un four de fusion à parois froides, ce four comportant un fond (18), pourvu d'un orifice, et des parois métalliques refroidis au moins en partie par une circulation d'eau, une source de chaleur apte à mettre en fusion le matériau à fondre et, sous le fond (18) du four, un dispositif (26) à au moins une lame coulissante réfrigérée, muni d'un actionneur (32) commandant son déplacement en translation le long de l'orifice, caractérisé en ce que :
- ledit orifice possède un diamètre D supérieur ou égal à l'épaisseur H de la paroi constituant le four ;
- il comprend un manchon métallique (20) dont la base comporte un épaulement (21) apte à s'adapter aux parois latérales de l'orifice, ce manchon ayant un passage central qui constitue le tube de coulée du matériau fondu, un jeu étant prévu entre les parois latérales de l'orifice et la base du manchon (20) pour loger un matériau isolant (22) entre le manchon et le fond froid du four ;
- le déplacement en translation de la lame coulissante détermine l'état de fermeture ou d'ouverture plus ou moins grande de l'orifice de manière à régler le débit du materiau fondu.

2. Dispositif selon la revendication 1, caractérisé en ce que la lame coulissante (26) possède un bord d'attaque incliné (34).

3. Dispositif selon l'une quelconque des revendications 1 et 2, caractérisé en ce que le manchon métallique (20) présente à sa base intérieure une partie (24) conique évasée en direction de l'orifice.

4. Dispositif selon l'une des revendications 1 à 3, caractérisé en ce que la lame coulissante est en acier réfractaire et le manchon en molybdène.

## Claims

1. Device for the extraction by pouring of a molten material in a cold structure melter, said melter having a floor (18), provided with an orifice, and metal walls at least partly cooled by a circulation of water, a heat source able to melt the material to be melted and, beneath the melter floor (18), a device (26) having at least one cooled, sliding blade, equipped with an actuator (32) controlling its displacement in translation along the orifice, characterized in that:
- said orifice has a diameter (D) equal to or greater than the thickness (H) of the wall constituting the melter,
- it comprises a metal sleeve (20), whose base has a shoulder (21) which can be adapted to the side walls of the orifice, said sleeve (20) having a central passage constituting the pouring tube for the molten material, a clearance being provided between the side walls of the orifice and the base of the sleeve in order to house an insulating material (22) between the sleeve and the cold floor of the melter,
- the displacement in translation of the sliding blade determining the more or less pronounced opening or closing state of the orifice, so as to regulate the flow rate of the molten material.

2. Device according to claim 1, characterized in that the sliding blade (26) has an inclined leading edge (34).

3. Device according to either of the claims 1 and 2, characterized in that the metal sleeve (20) has, at its inner base, a conical portion (24) widened in the direction of the orifice.

4. Device according to any one of the claims 1 to 3, characterized in that the sliding blade is made from refractory steel and the sleeve from molybdenum.

## Patentansprüche

1. Steuerungsvorrichtung für den Schmelzausfluß in einem kalten Tiegelofen, wobei dieser Ofen einen mit einer Öffnung versehenen Boden (18), wenigstens teilweise durch eine Wasserzirkulation gekühlte Metallwände und eine Wärmequelle zum Schmelzen des Schmelzmaterials umfaßt, sowie unter dem Boden (18) des Ofens eine Vorrichtung (26) mit wenigstens einer gekühlten Schieberplatte, versehen mit einer Betätigungseinrichtung (32) zum Steuern ihrer Translationsbewegung längs der Öffnung,
**dadurch gekennzeichnet :**
- daß die genannte Öffnung einen Durchmesser D größer oder gleich der Dicke H der den Ofen bildenden Wand hat;
- daß sie eine metallische Hülse (20) umfaßt, deren Unterteil eine Schulter (21) aufweist, die angepaßt ist an die Seitenwände der Öffnung, wobei diese Hülse einen zentralen Durchgang hat, der das Gießrohr des geschmolzenen Materials bildet, und zwischen den Seitenwänden der Öffnung und dem Unterteil der Hülse (20) ein Spiel vorgesehen ist, um ein Isoliermaterial (22) zwischen der Hülse und dem kalten Boden des Ofens anzubringen.
- daß die Translationsbewegung der Schieberplatte den Zustand einer mehr oder weniger großen Öffnung oder Schließung der Öffnung bestimmt, um die Durchflußmenge des geschmolzenen Materials zu regeln.

2. Vorrichtung nach Anspruch 1, dadurch gekennzeichnet, daß die Schieberplatte (26) einen schrägen Angriffsrand (34) hat.

3. Vorrichtung nach einem der Ansprüche 1 und 2, dadurch gekennzeichnet, daß die metallische Hülse (20) an ihrer Unterseite innen einen konischen Teil 24 aufweist, der sich in Richtung Öffnung erweitert.

4. Vorrichtung nach einem der Ansprüche 1 bis 3, dadurch gekennzeichnet, daß die Gleitplatte aus hitzebeständigem Stahl ist und die Hülse aus Molybdän.
